# EUROPEAN PATENT SPECIFICATION

(11) **EP 3 239 628 B1**
(45) Date of publication and mention of the grant of the patent: **24.10.2018**
(21) Application number: 17164673.0
(22) Date of filing: 04.04.2017
(51) Int. Cl.: F25B 41/06, F16K 31/00, G05D 23/275

(54) **EXPANSION VALVE**
EXPANSIONSVENTIL
VANNE D'EXPANSION

(30) Priority: 27.04.2016 JP 2016089004
(43) Date of publication of application: 01.11.2017
(73) Proprietor: Fujikoki Corporation, Tokyo 158-0082 (JP)
(72) Inventor: WATANABE, Ryouji, Setagaya-ku, Tokyo 158-0082 (JP); YANAGIYA, Hideyuki, Setagaya-ku, Tokyo 158-0082 (JP); ISAKA, Mitsuaki, Setagaya-ku, Tokyo 158-0082 (JP)
(74) Representative: Schweiger, Martin

(56) References cited:
- DE-A1-102009 060 017
- US-A- 2 209 216
- US-A- 2 259 280
- US-A- 4 542 852

## Description

### TECHNICAL FIELD

The present invention relates to an expansion valve having a built-in temperature sensing mechanism used for a refrigeration cycle.

### BACKGROUND ART

Conventionally, a temperature expansion valve having a temperature sensing mechanism and adjusting a refrigerant passage amount in response to a temperature is used in a refrigeration cycle used in an air conditioner or the like mounted on an automobile. A valve main body of such an expansion valve includes an inlet port which receives a high-pressure refrigerant and a valve chamber which communicates with the inlet port and a valve body driving mechanism called a power element is provided at a top portion of the valve main body.

The valve body having a spherical shape is disposed inside the valve chamber to face a valve seat of a valve hole opened to the valve chamber. The valve body is supported by a support member disposed inside the valve chamber and is urged toward the valve seat by a coil spring provided between the support member and an adjusting screw attached to the valve main body. Then, the valve body is operated by a valve rod driven by the power element to control an opening degree of a throttle passage between the valve body and the valve seat. Further, the refrigerant having passed through the valve hole is sent from an outlet port toward an evaporator.

Here, the high-pressure refrigerant flowing from the inlet port passes through the valve chamber. However, the high-pressure refrigerant sent to the expansion valve may have pressure fluctuations at the upstream side of the refrigeration cycle. Thus, when the pressure fluctuations are transmitted, a problem may arise in that the operation of the valve body becomes unstable. Since the pressure fluctuations cause a vibration in the vertical or horizontal direction of the valve body, abnormal sound is generated.

In order to prevent such a vibration, a configuration in which a vibration damping spring is provided between a coil spring and a support member and a leg portion of the vibration damping spring comes into contact with a valve main body inside a valve chamber to prevent a vibration is disclosed conventionally (for example, see Patent Document 1).

US4542852A discloses a vibration damping device for a thermostatic expansion valve. The vibration damping device includes a spring member having a plurality of cantilevered fingers. The cantilevered fingers are substantially parallel to a direction of travel of moving components and they are spring loaded to provide a force that is normal to that direction. The damping device is fixedly attached to one of moving or stationary components and is arranged so that its fingers exert a normal force against the other of the moving or stationary components.

DE102009060017A shows an adjusting screw for an expansion valve in a refrigeration system. The adjusting screw has a receiving space for a regulating element. A tool holder is arranged opposite to the receiving space and is provided with radially running holding sections for receiving a sealing element. The sealing element is arranged between an adjusting space and a base body. The base body has a base and an assembly element.

### CITATION LIST

### PATENT DOCUMENT

Patent Document 1: JP 2005-156046 A
Patent Document 2: US4542852A
Patent Document 3: DE102009060017A

### SUMMARY OF THE INVENTION

### PROBLEM TO BE SOLVED BY THE INVENTION

However, in the case of the conventional structure of the vibration damping spring of which the leg portion comes into contact with the valve main body, the leg portion is caught by an inlet port so that the leg portion is not operated properly when the leg portion reaches the inlet port. For this reason, there is a need to design the leg portion of the vibration damping spring so that the leg portion does not reach the inlet port. However, since the position of the inlet port becomes different depending on the specification of the expansion valve in some cases, the vibration damping spring cannot be disposed. Further, since the size inside the valve chamber can be decreased depending on the specification of the expansion valve, a space for disposing the vibration damping spring cannot be ensured.

Here, an object of the invention is to provide an expansion valve capable of preventing a vibration of a valve body regardless of a shape of a valve chamber.

### MEANS FOR SOLVING PROBLEM

In order to achieve the above-described object, according to an aspect of an invention, there is provided an expansion valve including: a valve main body which includes a valve hole allowing an inlet port receiving a refrigerant to communicate with an outlet port discharging the refrigerant; a valve body which adjusts an amount of the refrigerant flowing through the valve hole; a power element which is attached to the valve main body and drives the valve body through a valve rod; a support member that supports the valve body; a coil spring which presses the valve body in a closing direction through the support member; an adjusting screw which is threaded into the valve main body and adjusts a pressing force of the coil spring; and a vibration damping member that is locked to the adjusting screw, in which the support member includes a sliding portion which contacts the vibration damping member to be slidable in an opening/closing direction of the valve body. The vibration damping member and the sliding portion are disposed inside the coil spring.

Further, the vibration damping member may include a leaf spring portion and press the sliding portion by an elastic force of the leaf spring portion. Furthermore, the sliding portion may include a columnar portion and the vibration damping member may press an outer peripheral surface of the columnar portion by the elastic force of the leaf spring portion. Moreover, the sliding portion may include a cylindrical portion and the vibration damping member may press an inner peripheral surface of the cylindrical portion by an elastic force of the leaf spring portion.

Further, the vibration damping member may be a cylindrical elastic member and press the sliding portion disposed therein by a restoring force of the cylinder. Furthermore, the vibration damping member may be provided with a slit extending in a vertical direction.

Further, the sliding portion of the support member may include a leg portion and press the vibration damping member by an elastic force of the leg portion. Furthermore, the vibration damping member may include a columnar portion and press an outer peripheral surface of the columnar portion by the elastic force of the leg portion. Moreover, the vibration damping member may include a cylindrical portion and press an inner peripheral surface of the cylindrical portion by the elastic force of the leg portion.

Further, the sliding portion includes a cylindrical portion, the adjusting screw includes a protrusion extending upward, the vibration damping member is an oval cylindrical member provided at the protrusion, and the inner peripheral surface of the cylindrical portion of the sliding portion is pressed by the restoring force of the cylindrical member.

Further, the vibration damping member may include a plate-shaped locking portion extending in a horizontal direction and lock the vibration damping member to the adjusting screw by interposing the locking portion between the adjusting screw and the coil spring. Furthermore, the adjusting screw may include a protrusion located at a center, the vibration damping member may be inserted into the protrusion, and the vibration damping member may be locked to the adjusting screw.

Further, the vibration damping member may cover the outside of the coil spring and the sliding portion may be formed on a side surface of a flange portion receiving an upper portion of the coil spring by a lower surface. Furthermore, a pressure equalizing passage communicating with an inner space formed inside the support member or the vibration damping member may be provided at the support member or the vibration damping member.

### EFFECT OF THE INVENTION

Since the expansion valve according to the invention has the above-described configuration, the valve body can have a vibration damping structure regardless of the shape of the valve chamber.

### BRIEF DESCRIPTION OF DRAWINGS

Fig. 1 is a longitudinal sectional view illustrating an expansion valve according to a first embodiment of the invention;
Fig. 2 is a longitudinal sectional view illustrating a main part of the expansion valve according to the first embodiment;
Fig. 3 is an exploded perspective view illustrating a main part of the expansion valve according to the first embodiment;
Fig. 4 is a longitudinal sectional view illustrating a main part of an expansion valve according to a modified example of the first embodiment;
Fig. 5 is a longitudinal sectional view illustrating a main part of an expansion valve according to a second embodiment;
Fig. 6 is an exploded perspective view illustrating a main part of the expansion valve according to the second embodiment;
Fig. 7 is a longitudinal sectional view illustrating a main part of an expansion valve according to a third embodiment;
Fig. 8 is an exploded perspective view illustrating a main part of the expansion valve according to the third embodiment;
Fig. 9 is a longitudinal sectional view illustrating a main part of an expansion valve according to a fourth embodiment;
Fig. 10 is an exploded perspective view illustrating a main part of the expansion valve according to the fourth embodiment;
Fig. 11 is a longitudinal sectional view illustrating a main part of an expansion valve according to a fifth embodiment;
Fig. 12 is an exploded perspective view illustrating a main part of the expansion valve according to the fifth embodiment;
Fig. 13 is a longitudinal sectional view illustrating a main part of an expansion valve according to a comparative example;
Fig. 14 is an exploded perspective view illustrating a main part of the expansion valve according to the comparative example;
Fig. 15 is a longitudinal sectional view illustrating a main part of an expansion valve according to a sixth embodiment;
Fig. 16 is an exploded perspective view illustrating a main part of the expansion valve according to the sixth embodiment;
Fig. 17 is a longitudinal sectional view illustrating a main part of an expansion valve according to a seventh embodiment;
Fig. 18 is an exploded perspective view illustrating a main part of the expansion valve according to the seventh embodiment;
Fig. 19 is a longitudinal sectional view illustrating a main part of an expansion valve according to an eighth embodiment; and
Fig. 20 is an exploded perspective view illustrating the main part of the expansion valve according to the eighth embodiment.

### MODE(S) FOR CARRYING OUT THE INVENTION

### <First Embodiment>

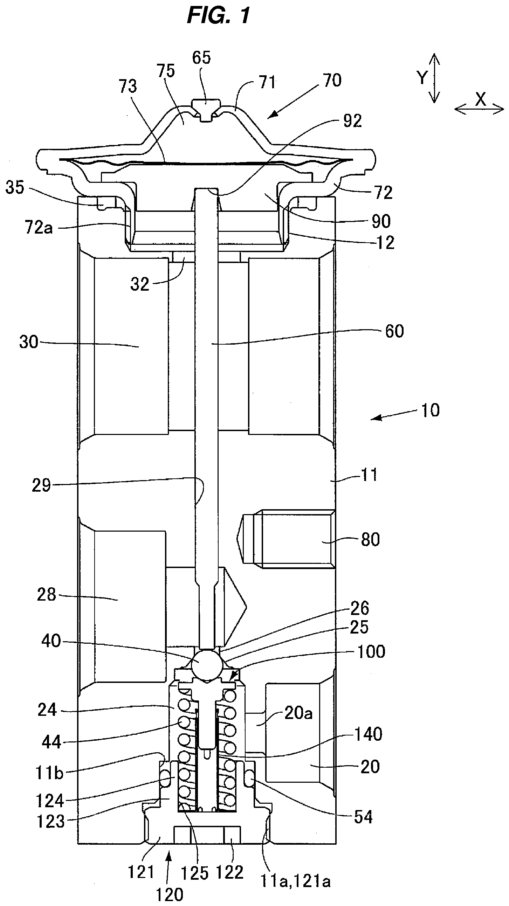

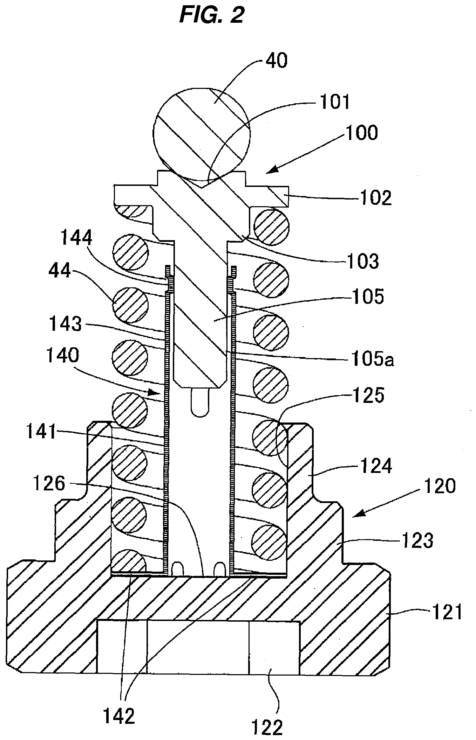

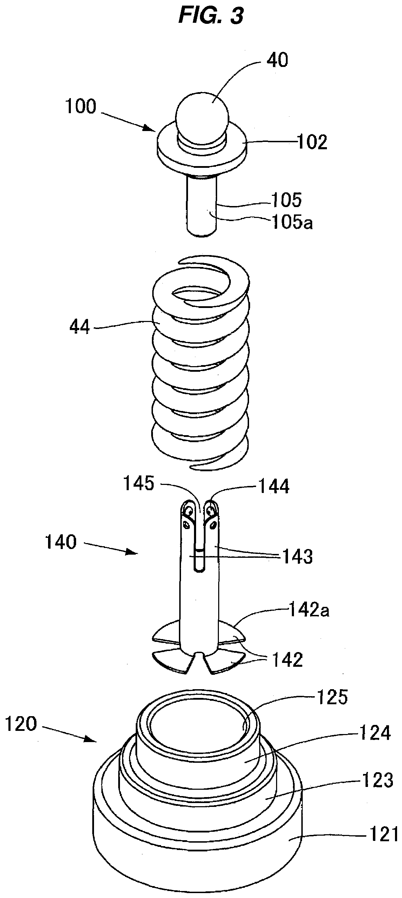

Fig. 1 is a longitudinal sectional view illustrating an expansion valve according to a first embodiment of the invention. Fig. 2 is a longitudinal sectional view illustrating a main part of the expansion valve according to the first embodiment. Fig. 3 is an exploded perspective view illustrating a main part of the expansion valve according to the first embodiment.

As illustrated in Fig. 1, an expansion valve 10 includes a valve main body 11, a power element 70, a valve body 40, a valve rod 60, a support member 100, a coil spring 44, an adjusting screw 120, and a vibration damping member 140.

The valve main body 11 is made of, for example, aluminum alloy and can be obtained, for example, by extruding aluminum alloy or the like in an extrusion direction which is the X direction of Fig. 1 and processing the extruded aluminum alloy. The valve main body 11 includes a power element attachment portion 12 which is a female screw formed on the upper surface portion thereof and threaded to a male screw 72a of a power element 70 to fix the power element, an inlet port 20 into which a high-pressure refrigerant is introduced, an outlet port 28 through which the refrigerant flowing into the inlet port 20 flows out, a return passage 30 which returns the refrigerant, a female screw hole 11a which is formed on a bottom surface portion of the valve main body 11, an attachment hole (or an attachment female screw) 80 which attaches the valve main body 11 to an evaporator (not illustrated) or other parts, and the like.

The power element attachment portion 12 is formed as a bottomed cylindrical hole which is opened in a circular shape to the upper surface of the valve main body 11 at the upper end of the valve main body 11 and has a female screw formed on the inner wall surface thereof. An opening 32 which reaches (communicates with) the return passage 30 is formed at the center of the bottom portion of the hole. Here, the direction of the center axis of the power element attachment portion 12 is a direction (the Y direction) substantially orthogonal to a direction (the X direction) in which the refrigerant passing through the return passage 30 passes.

The female screw hole 11a is formed at the lower surface of the valve main body 11 to be opened to the lower end and an insertion hole 11b is formed at the upper portion thereof. When the opening portion of the female screw hole 11a is blocked by the adjusting screw 120, a valve chamber 24 is formed inside the valve main body 11.

The inlet port 20 is formed to communicate with the valve chamber 24 through a small diameter hole 20a from the side of the valve chamber 24. Further, the outlet port 28 is formed above the valve chamber 24. The outlet port 28 communicates with the upper end of the valve chamber 24 through a valve hole 26 which is an orifice. Further, a valve seat 25 is formed on the side of the valve chamber 24 in the valve hole 26. The valve main body 11 is provided with a through hole 29 in the vertical direction (the Y direction in Fig. 1). Then, the valve hole 26, the through hole 29, the opening 32, and the valve chamber 24 are disposed so that the center axes are located on the same line. The return passage 30 is formed at the further upper side of the outlet port 28 in the valve main body 11 and is formed to penetrate the valve main body 11 in the horizontal direction (the X direction in Fig. 1).

The power element 70 includes an upper lid member 71 that is made of, for example, stainless steel or the like, a receiving member 72 that has a penetration hole formed at a center portion, a diaphragm 73 which is sandwiched between the upper lid member 71 and the receiving member 72, a stopper member 90 that is disposed between the diaphragm 73 and the receiving member 72, and the like. Then, the upper lid member 71, the diaphragm 73, and the receiving member 72 are circumferentially welded while overlapping one another so that these members are integrated with one another. A pressure action chamber 75 is formed between the upper lid member 71 and the diaphragm 73 and is sealed by a sealing plug 65 after a working gas is enclosed in the pressure action chamber 75. The lower portion of the receiving member 72 is formed in a cylindrical shape and the male screw 72a is formed in the periphery thereof. Then, the male screw is threaded to the female screw (the female screw formed on the upper surface of the valve main body 11) of the power element attachment portion 12. The power element 70 is attached to the valve main body 11 through a packing 35.

The valve body 40 is a spherical member that is disposed to face the valve seat 25 and is provided inside the valve chamber 24. The valve rod 60 is provided to be inserted into each of the valve hole 26, the through hole 29, and the opening 32 of the valve main body 11 and is disposed so that the upper end of the valve rod 60 comes into contact with a receiving portion 92 of the lower surface of the stopper member 90 of the power element 70 and the lower end thereof contacts the valve body 40.

The support member 100 is a member that supports the valve body 40 toward the valve seat 25 and the valve body 40 may be fixed to the support member 100. The support member 100 includes a main body 103, an upper surface 101, a flange portion 102, and a sliding portion 105. The upper surface of the columnar main body 103 includes a conical recess and is formed as the upper surface 101 which supports the lower surface of the valve body 40. Further, the support member includes the flange portion 102 which protrudes toward the side surface (the outer periphery) in relation to the main body 103 and the lower surface of the flange portion 102 is used to receive one end of the coil spring 44. At this time, the main body 103 below the flange portion 102 is formed to enter the inner diameter of the coil spring 44. The sliding portion 105 is formed in a columnar shape provided at the lower portion of the main body 103. An outer peripheral surface 105a of the sliding portion 105 is a portion which comes into contact with a protrusion 144 of the vibration damping member 140. The columnar diameter of the sliding portion 105 is smaller than the columnar diameter of the main body 103 and the sliding portion 105 is formed in a size in which the sliding portion enters a gap between the leaf spring portions 143 facing the vibration damping member 140 while being pressed inward by the elastic force of the leaf spring portion 143. The support member 100 is made of, for example, metal.

The coil spring 44 is installed between the lower surface of the flange portion 102 provided at the support member 100 and a concave portion 125 formed at the adjusting screw 120. By the urging force of the coil spring 44, the valve body 40 is urged toward the valve seat 25 through the support member 100.

The adjusting screw 120 includes a main body 121, a hexagonal hole 122, an insertion portion 123, a front end 124, and a concave portion 125. The insertion portion 123 is formed at the upper portion of the main body 121 to have an outer diameter smaller than that of the main body 121 and the front end 124 is formed at the upper portion of the insertion portion 123 to have an outer diameter smaller than that of the insertion portion 123. Further, the outer periphery of the main body 121 is formed as a male screw portion 121a which is threaded to the female screw hole 11a opened to the lower end of the valve main body 11. Furthermore, the upper portion of the adjusting screw 120 is provided with the concave portion 125 of which the upper portion is opened and which has a columnar space and the bottom portion 126 is formed as a flat circular surface. The concave portion 125 is formed in a depth reaching the vicinity of the main body 121. Further, the inner diameter of the concave portion 125 is set to a size matching the outer diameter of the coil spring 44 so that the coil spring 44 is not displaced while being inserted into the concave portion 125. The lower portion of the adjusting screw 120 (the main body 121) is provided with the hexagonal hole 122. As the material of the adjusting screw 120, for example, resin can be used.

Regarding the attachment of the adjusting screw 120 to the valve main body 11, the threading amount can be adjusted in such a manner that the adjusting screw 120 is inserted from the lower end of the valve main body 11 and the hexagonal hole 122 is rotated by a tool (not illustrated). When the threading amount of the adjusting screw 120 is adjusted, it is possible to adjust a spring force of the coil spring 44 supporting the valve body 40 and the support member 100. At this time, the insertion portion 123 of the adjusting screw 120 is inserted into the insertion hole 11b of the valve main body 11 and a seal member 54 such as an O-ring is disposed at the side of the valve chamber 24 to be located between the outer periphery of the front end 124 of the adjusting screw 120 and the inner periphery of the insertion hole 11b of the valve main body 11. Accordingly, the valve chamber 24 is sealed from the outer atmosphere of the expansion valve 10.

The vibration damping member 140 includes a pipe portion 141, a locking portion 142, and a leaf spring portion 143. The pipe portion 141 is formed in a cylindrical shape having an outer diameter smaller than the inner diameter of the coil spring 44 so that the pipe portion enters the inner diameter of the coil spring 44 and the lower portion is provided with the locking portion 142. The locking portion 142 is formed as a plurality of plate-shaped members extending in the horizontal direction from the lower portion of the pipe portion 141 and the outer periphery 142a of the locking portion 142 is formed in a shape following the inner periphery of the concave portion 125 so that the locking portion enters the concave portion 125. Further, the upper portion of the pipe portion 141 is formed as a plurality of the leaf spring portions 143 extending upward from the pipe portion 141. Specifically, four leaf spring portions 143 are provided so that two leaf spring portions face each other and the protrusion 144 is formed inward in the vicinity of the front end of each of the leaf spring portions 143. Further, a gap 145 is provided between the adjacent leaf spring portions 143. The vibration damping member 140 is an elastically deformable member and is made of, for example, metal.

As for the assembly of the vibration damping member 140, the vibration damping member 140 is inserted into the concave portion 125 of the adjusting screw 120 and the coil spring 44 is inserted into the concave portion 125 of the adjusting screw 120. Then, the locking portion 142 of the vibration damping member 140 is locked while being sandwiched between the coil spring 44 and the bottom portion 126 of the adjusting screw 120. Since the outer periphery 142a of the locking portion 142 is formed in a shape following the inner periphery of the concave portion 125, horizontal rattling is small. Meanwhile, the sliding portion 105 of the support member 100 is inserted between the facing leaf spring portions 143 from the upper portion of the vibration damping member 140. At this time, the protrusion 144 of the leaf spring portion 143 is pressed toward the inner sliding portion 105 at a constant force by the elastic force of the leaf spring portion 143. A direction of the force generated by the pressing operation becomes orthogonal to the opening/closing direction of the valve body 40 moving along with the support member 100. That is, the sliding portion 105 is pressed inward by four protrusions 144 from four directions.

Next, the operation will be described. In the expansion valve 10 of the first embodiment of the invention, the refrigerant flows from the inlet port 20 through the small diameter hole 20a, passes through the valve chamber 24 and the valve hole 26 to be expanded, and is delivered from the outlet port 28 to an evaporator (not illustrated). Further, the refrigerant which is delivered from the evaporator passes through the return passage 30 so that the refrigerant enters the return passage from the left inlet and is discharged from the right outlet, and is returned to a compressor (not illustrated). At this time, a part of the refrigerant passing through the return passage 30 flows from the opening 32 to the lower portion of the power element 70. Then, the pressure of the working gas inside the pressure action chamber 75 is changed in response to a temperature change of the refrigerant flowing into the lower portion of the power element 70. At this time, the stopper member 90 moves up and down while receiving the movement of the diaphragm 73 deformed in response to a variation in the internal pressure of the pressure action chamber 75. Then, the movement of the stopper member 90 is transmitted to the valve body 40 through the valve rod 60. Accordingly, it is possible to accomplish the role of the expansion valve.

Since the sliding portion 105 of the support member 100 is pressed inward at a constant force from the vibration damping member 140, a friction force is generated between the support member 100 and the vibration damping member 140 when the support member 100 moves in the opening/closing direction (the vertical direction) of the valve body 40. Accordingly, since the support member 100 does not respond sensitively in the vertical direction in response to a pressure change of the high-pressure refrigerant from the inlet port 20, a vibration in the vertical direction can be prevented or reduced. Further, since the support member 100 is pressed at a constant force from the vibration damping member 140, the support member 100 does not move simply in the horizontal direction against the pressing force in response to the pressure change of the high-pressure refrigerant from the inlet port 20 and thus effectively prevents the vibration in the horizontal direction. At the same time, the movement of the support member 100 in the vertical direction is guided. Since the vibration damping member 140 and the sliding portion 105 are provided inside the coil spring 44, a vibration preventing structure can be constructed regardless of the shape of the valve chamber 24 or the position of the inlet port 20 (the small diameter hole 20a). When such a vibration is prevented, abnormal sound can be suppressed. Further, although there is a possibility that the pressure inside the pipe portion 141 and the pressure of the valve chamber 24 outside the pipe portion 141 may differ from each other due to the sliding of the sliding portion 105, the gap 145 serves as a pressure equalizing passage which allows the internal space formed inside the pipe portion 141 to communicate with the valve chamber 24 so that the refrigerant moves therethrough and thus the movement of the valve body 40 is not influenced while any pressure difference does not occur. Further, since the locking portion 142 of the vibration damping member 140 is locked while being sandwiched between the coil spring 44 and the bottom portion 126 of the adjusting screw 120, the adjusting screw of the conventional expansion valve without the vibration damping member 140 can be commonly used without any change in design.

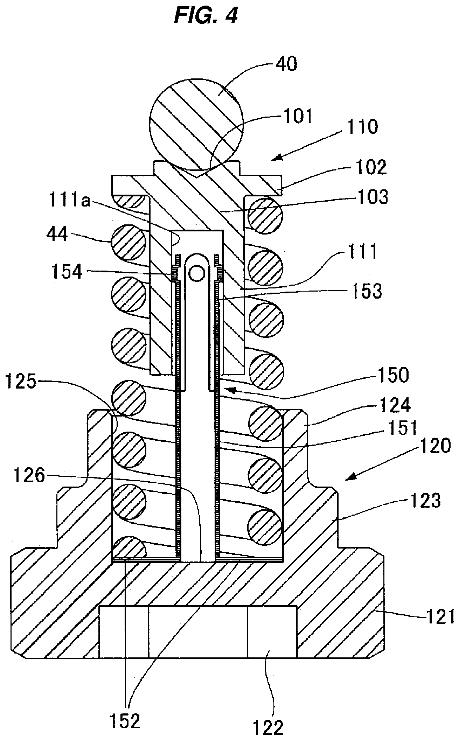

Fig. 4 is a longitudinal sectional view illustrating a main part of an expansion valve according to a modified example of the first embodiment. Since the configuration of the modified example is the same as that of Figs. 1 to 3 except that the support member 100 is replaced by a support member 110 and the vibration damping member 140 is replaced by a vibration damping member 150, a repetitive description of the common parts will be omitted.

The support member 110 is a member that supports the valve body 40 toward the valve seat 25 and the valve body 40 may be fixed to the support member 110. The support member 110 includes a main body 103, an upper surface 101, a flange portion 102, and a sliding portion 111 and the main body 103, the upper surface 101, and the flange portion 102 are the same as those of the support member 100. The sliding portion 111 is provided at the lower portion of the main body 103 and is formed in a cylindrical shape to be opened downward. The outer diameter of the sliding portion 111 is the same as the outer diameter of the main body 103 and is formed in a size in which the sliding portion enters the inner diameter of the coil spring 44. Then, a cylindrical inner peripheral surface 111a of the sliding portion 111 is a portion which comes into contact with the protrusion 154 of the vibration damping member 150 and the size of the inside of the cylinder of the sliding portion 111 is set to a size in which the leaf spring portion 153 of the vibration damping member 150 enters therein while being pressed outward by the elastic force of the leaf spring portion 153. The support member 110 is made of, for example, metal.

The vibration damping member 150 includes a pipe portion 151, a locking portion 152, and a leaf spring portion 153. The pipe portion 151 is formed in a cylindrical shape having an outer diameter which is smaller than the inner diameter of the coil spring 44 and the inner diameter of the cylinder of the sliding portion 111 and the lower portion is provided with the locking portion 152. The locking portion 152 is formed as a plurality of plate-shaped members extending in the horizontal direction from the lower portion of the pipe portion 151 and the outer periphery 152a of the locking portion 152 is formed in a shape following the inner periphery of the concave portion 125 so that the locking portion enters the concave portion 125. Further, the upper portion of the pipe portion 151 is formed as a plurality of the leaf spring portions 153 extending upward from the pipe portion 151. Similarly to the vibration damping member 140, four leaf spring portions 153 are provided so that two leaf spring portions face each other and the protrusion 154 is formed outward in the vicinity of the front end of each of the leaf spring portions 153. Further, a gap is formed between the adjacent leaf spring portions 153. The vibration damping member 150 is an elastically deformable member and is made of, for example, metal.

As for the assembly of the vibration damping member 150, the vibration damping member 150 is inserted into the concave portion 125 of the adjusting screw 120 and the coil spring 44 is inserted into the concave portion 125 of the adjusting screw 120. Then, the locking portion 152 of the vibration damping member 150 is locked while being sandwiched between the coil spring 44 and the bottom portion 126 of the adjusting screw 120. Further, since the outer periphery 152a of the locking portion 152 is formed in a shape following the inner periphery of the concave portion 125, horizontal rattling is small. Meanwhile, the leaf spring portion 153 is inserted from the upper portion of the vibration damping member 150 into the cylinder of the sliding portion 111 of the support member 110. At this time, the protrusion 154 of the leaf spring portion 153 is pressed outward toward the inner peripheral surface 111a of the sliding portion 111 at a constant force by the elastic force of the leaf spring portion 153. A direction of the force generated by the pressing operation becomes orthogonal to the opening/closing direction of the valve body 40 moving along with the support member 110. That is, the sliding portion 111 is pressed outward by four protrusions 154 from four directions.

In the modified example of Fig. 4, since the sliding portion 111 of the support member 110 is pressed outward at a constant force from the vibration damping member 150, the same effect as that of Figs. 1 to 3 can be obtained. Further, since the leaf spring portion 153 is disposed inside the sliding portion 111, an influence of the flow of the refrigerant toward the leaf spring portion 153 can be reduced.

### <Second Embodiment>

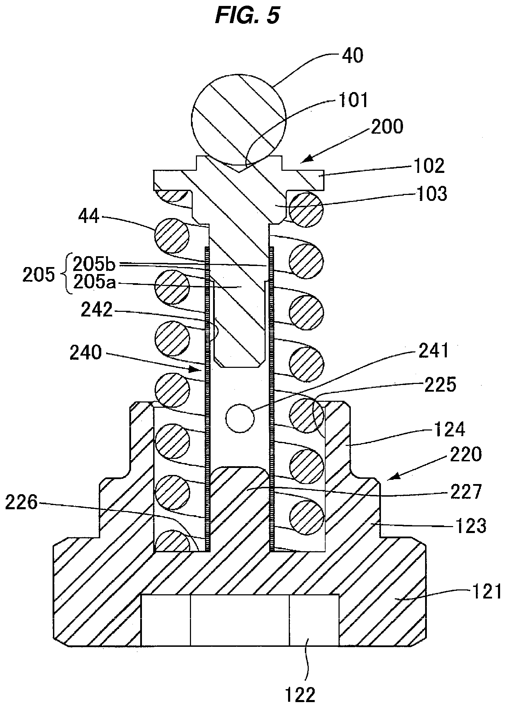

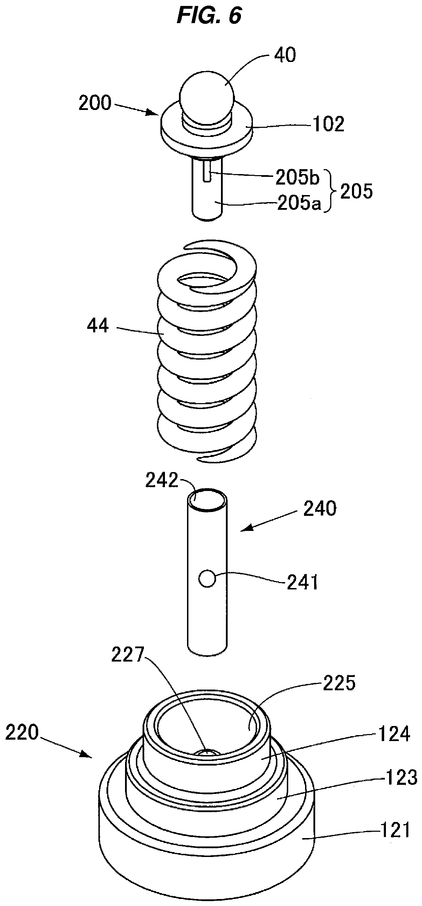

Fig. 5 is a longitudinal sectional view illustrating a main part of an expansion valve according to a second embodiment. Fig. 6 is an exploded perspective view illustrating a main part of the expansion valve according to the second embodiment. Since the configuration of the second embodiment is the same as that of the first embodiment (Figs. 1 to 3) except that the support member 100, the adjusting screw 120, and the vibration damping member 140 of the first embodiment are respectively replaced by a support member 200, an adjusting screw 220, and a vibration damping member 240, a repetitive description of the common parts will be omitted.

The support member 200 is a member that supports the valve body 40 toward the valve seat 25 and the valve body 40 may be fixed to the support member 200. The support member 200 includes a main body 103, an upper surface 101, a flange portion 102, and a sliding portion 205 and the main body 103, the upper surface 101, and the flange portion 102 are the same as those of the support member 100 of the first embodiment. The lower portion of the main body 103 is provided with the sliding portion 205 and the sliding portion 205 includes a columnar portion 205a and a protrusion portion 205b. The diameter of the columnar portion 205a is smaller than the diameter of the column of the main body 103 and is smaller than the inner diameter of the vibration damping member 240. The protrusion portion 205b is provided at the side surface of the columnar portion 205a to extend downward by a predetermined length from the main body 103. The protrusion portion 205b is provided at two positions of both side surfaces of the columnar portion 205a. The protrusion portion 205b is a portion with which an inner surface 242 of the vibration damping member 240 comes into contact. The support member 200 is made of, for example, metal.

The adjusting screw 220 includes a main body 121, a hexagonal hole 122, an insertion portion 123, a front end 124, a concave portion 225, and a protrusion 227 and the main body 121, the hexagonal hole 122, the insertion portion 123, and the front end 124 are the same as the adjusting screw 120 of the first embodiment. The upper portion of the adjusting screw 220 is provided with the concave portion 225 having a columnar space opened upward, but the protrusion 227 having a columnar shape is formed upward in the vicinity of the center of the bottom portion 226 of the concave portion 225. The protrusion 227 has a diameter in which the protrusion can be inserted into the vibration damping member 240 and a length in which the protrusion can be fixed. Further, the concave portion 225 is formed in a depth reaching the vicinity of the main body 121. Further, the inner diameter of the concave portion 225 matches the outer diameter of the coil spring 44 so that the coil spring 44 is inserted into the concave portion 225 without any misalignment. The adjusting screw 220 is attached to the valve main body 11 in the same manner as the adjusting screw 120 of the first embodiment.

The vibration damping member 240 is a cylindrical member that extends to be elastically deformable and is made of, for example, metal. The outer diameter of the vibration damping member 240 is smaller than the inner diameter of the coil spring 44 so that the outer diameter enters the inner diameter of the coil spring 44. The inner diameter of the vibration damping member 240 is formed in a size in which the sliding portion 205 of the support member 200 is inserted into the upper portion and the protrusion 227 of the adjusting screw 220 is inserted into the lower portion. Then, a hole 241 which allows the outside to communicate with the intermediate side of the cylinder is provided in the middle of the vibration damping member 240 and the hole 241 accomplishes a role as a pressure equalizing passage for equalizing the pressures of the intermediate side of the cylinder and the outside.

As for the assembly of the vibration damping member 240, the lower side of the vibration damping member 240 is fixed to the protrusion 227 of the adjusting screw 220 by press-inserting or the like. Next, the coil spring 44 is inserted into the concave portion 125 of the adjusting screw 120 and the sliding portion 205 of the support member 200 is inserted from the upper portion of the vibration damping member 240. At this time, the inner surface 242 of the vibration damping member 240 is pressed outward in two opposite directions by the protrusion portion 205b and the vibration damping member 240 has an oval cross-sectional shape. Then, a force in which an oval shape returns to a circular shape is exerted by the restoring force generated by the elasticity of the vibration damping member 240 and the inner surface 242 of the vibration damping member 240 is pressed inward toward the protrusion portion 205b. A direction of the force generated by the pressing operation becomes orthogonal to the opening/closing direction of the valve body 40 moving along with the support member 200. That is, the vibration damping member 240 is pressed inward toward two protrusion portions 205b from two directions.

The second embodiment has the same effect as that of the first embodiment by a configuration in which the sliding portion 205 of the support member 200 is pressed inward at a constant force from the vibration damping member 240. Further, since the vibration damping member 240 has a cylindrical shape, an increase in cost is suppressed. At the same time, since the lower portion of the vibration damping member 240 is inserted into the protrusion 227 of the adjusting screw 220, the vibration damping member 240 is reliably fixed.

### <Third Embodiment

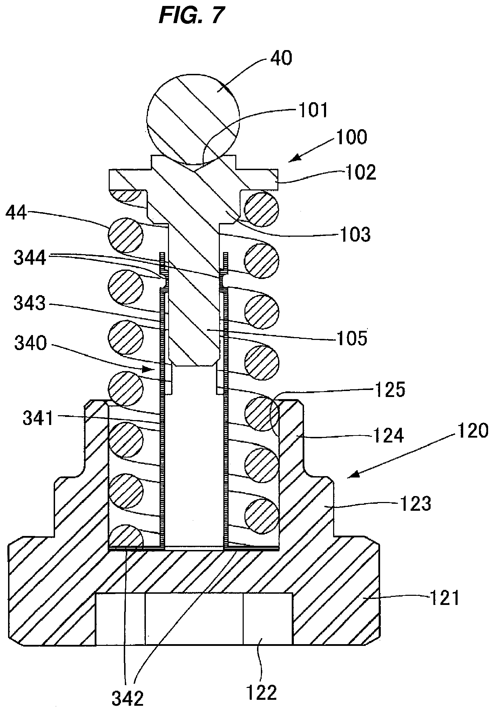

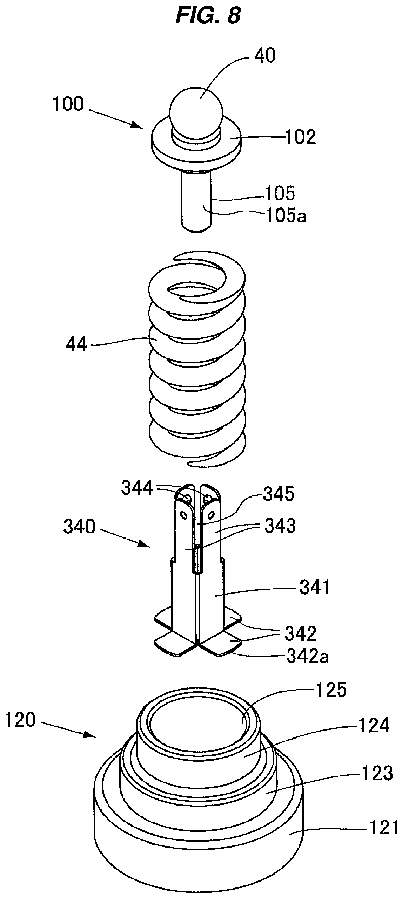

Fig. 7 is a longitudinal sectional view illustrating a main part of an expansion valve according to a third embodiment. Fig. 8 is an exploded perspective view illustrating a main part of the expansion valve according to the third embodiment. Since the configuration of the third embodiment is the same as that of the first embodiment (Figs. 1 to 3) except that the vibration damping member 140 of the first embodiment is replaced by a vibration damping member 340, a repetitive description of the common parts will be omitted.

The vibration damping member 340 includes a pipe portion 341, a locking portion 342, and a leaf spring portion 343. The pipe portion 341 is formed in a square pipe shape extending in the vertical direction and is formed to have a square cross-section in which the length of each side is the same in the top view. Here, the corner may have a curvature. Further, the diagonal length of the pipe portion 341 in the cross-section in the top view is smaller than the inner diameter of the coil spring 44 so that the pipe portion enters the inner diameter of the coil spring 44. The lower portion of the pipe portion 341 is provided with the locking portion 342.

The locking portion 342 is formed as a plurality of (four) plate-shaped members extending in the horizontal direction from each side of the lower portion of the pipe portion 341 and the outer periphery 342a of the locking portion 342 is formed in a shape following the inner periphery of the concave portion 125 so that the locking portion enters the concave portion 125. Further, the upper portion of the pipe portion 341 is formed as a plurality of the leaf spring portions 343. Specifically, four leaf spring portions 343 are provided to extend upward from the respective sides of the pipe portion 341 and a protrusion 344 is formed inward in the vicinity of the front end of each of the leaf spring portions 343. Further, a gap 345 is formed between the adjacent leaf spring portions 343. The gap 345 is formed at a portion corresponding to the leg portion of the pipe portion 341 when viewed from above. The vibration damping member 340 is an elastically deformable member and is made of, for example, metal.

As for the assembly of the vibration damping member 340, the vibration damping member 340 is inserted into the concave portion 125 of the adjusting screw 120 and the coil spring 44 is inserted into the concave portion 125 of the adjusting screw 120. Then, the locking portion 342 of the vibration damping member 340 is locked while being sandwiched between the coil spring 44 and the bottom portion 126 of the adjusting screw 120. Further, since the outer periphery 342a of the locking portion 342 is formed in a shape following the inner periphery of the concave portion 125, horizontal rattling is small. Meanwhile, the sliding portion 105 of the support member 100 is inserted between the facing leaf spring portions 343 from the upper portion of the vibration damping member 340. At this time, the protrusion 344 of the leaf spring portion 343 is pressed toward the inner sliding portion 105 at a constant force by the elastic force of the leaf spring portion 343. A direction of the force generated by the pressing operation becomes orthogonal to the opening/closing direction of the valve body 40 moving along with the support member 100. That is, the sliding portion 105 is pressed inward by four protrusions 344 from four directions.

The third embodiment has the same effect as that of the first embodiment by a configuration in which the sliding portion 105 of the support member 100 is pressed inward at a constant force from the vibration damping member 340. Further, since the vibration damping member 340 has a square shape, the leaf spring portion 343 can be formed in a linear shape to be continuous from the pipe portion 341 and thus the leaf spring portion 343 can be easily formed.

### <Fourth Embodiment

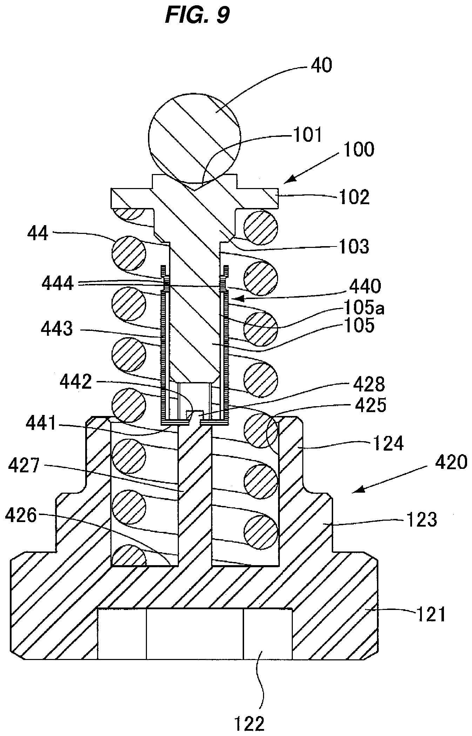

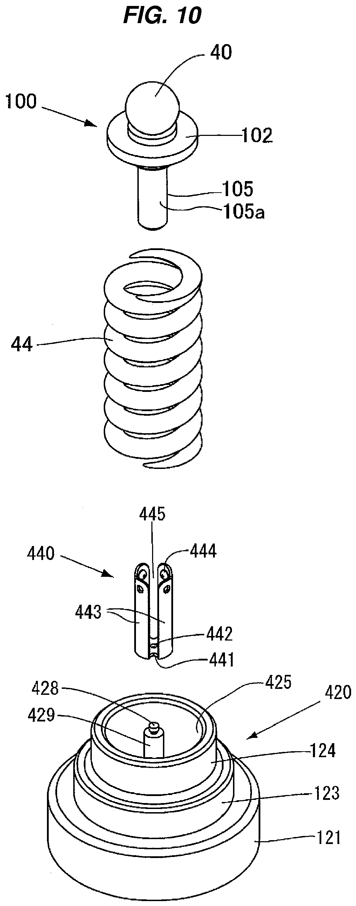

Fig. 9 is a longitudinal sectional view illustrating a main part of an expansion valve according to a fourth embodiment. Fig. 10 is an exploded perspective view illustrating a main part of the expansion valve according to the fourth embodiment. Since the configuration of the fourth embodiment is the same as that of the first embodiment (Figs. 1 to 3) except that the adjusting screw 120 and the vibration damping member 140 of the first embodiment are respectively replaced by an adjusting screw 420 and a vibration damping member 440, a repetitive description of the common parts will be omitted.

The adjusting screw 420 includes a main body 121, a hexagonal hole 122, an insertion portion 123, a front end 124, a concave portion 425, a protrusion 427, and a convex portion 428 and the main body 121, the hexagonal hole 122, the insertion portion 123, and the front end 124 are the same as those of the adjusting screw 120 of the first embodiment. The upper portion of the adjusting screw 420 is provided with the concave portion 425 which has a columnar space opened upward, but the protrusion 427 having a columnar shape is formed upward in the vicinity of the center of the bottom portion 426 of the concave portion 425. Further, the front end of the protrusion 427 is provided with the convex portion 428. The convex portion 428 has a diameter smaller than the protrusion 427 and the small diameter portion is fixed to the vibration damping member 440 by clamping. Additionally, the concave portion 425 is formed in a depth reaching the vicinity of the main body 121. Further, the inner diameter of the concave portion 425 matches the outer diameter of the coil spring 44 so that the coil spring 44 is inserted into the concave portion 425 without any misalignment. The adjusting screw 420 is attached to the valve main body 11 in the same manner as the adjusting screw 120 of the first embodiment.

The vibration damping member 440 includes a bottom portion 441 and a leaf spring portion 443. The bottom portion 441 is a plate-shaped member having a fixing hole 442 formed at the center thereof and is formed as a plane in the horizontal direction. Then, the size of the bottom portion is formed to be smaller than the inner diameter of the coil spring 44 so that the vibration damping member 440 enters the inner diameter of the coil spring 44. Further, a plurality of the leaf spring portions 443 are formed to extend upward from the side surface of the bottom portion 441. Specifically, four leaf spring portions 443 are provided so that two leaf spring portions face each other and a protrusion 444 is formed inward in the vicinity of the front end of each of the leaf spring portions 443. Further, a gap 445 is formed between the adjacent leaf spring portions 443. The vibration damping member 440 is an elastically deformable member and is made of, for example, metal.

As for the assembly of the vibration damping member 440, the fixing hole 442 of the bottom portion 441 is inserted into the convex portion 428 of the front end of the protrusion 427 of the adjusting screw 420. Next, when the convex portion 428 is clamped by thermal deformation or the like, the fixing hole 442 is sandwiched between the convex portion 428 widened by clamping and the side surface of the front end of the protrusion 427 and the bottom portion 441 is fixed to the front end of the protrusion 427. Next, the coil spring 44 is inserted into the concave portion 125 of the adjusting screw 120 and the sliding portion 105 of the support member 100 is inserted between the facing leaf spring portions 443 from the upper portion of the vibration damping member 440. At this time, the protrusion 444 of the leaf spring portion 443 is pressed toward the inner sliding portion 105 at a constant force by the elastic force of the leaf spring portion 443. A direction of the force generated by the pressing operation becomes orthogonal to the opening/closing direction of the valve body 40 moving along with the support member 100. That is, the sliding portion 105 is pressed inward by four protrusions 444 from four directions.

The fourth embodiment has the same effect as that of the first embodiment by a configuration in which the sliding portion 105 of the support member 100 is pressed inward at a constant force from the vibration damping member 440. Further, since the vibration damping member 440 is fixed in such a manner that the convex portion 428 of the front end of the protrusion 427 of the adjusting screw 420 is clamped while being inserted into the fixing hole 442, the vibration damping member can be reliably fixed and the support member can be easily attached during assembly.

### <Fifth Embodiment>

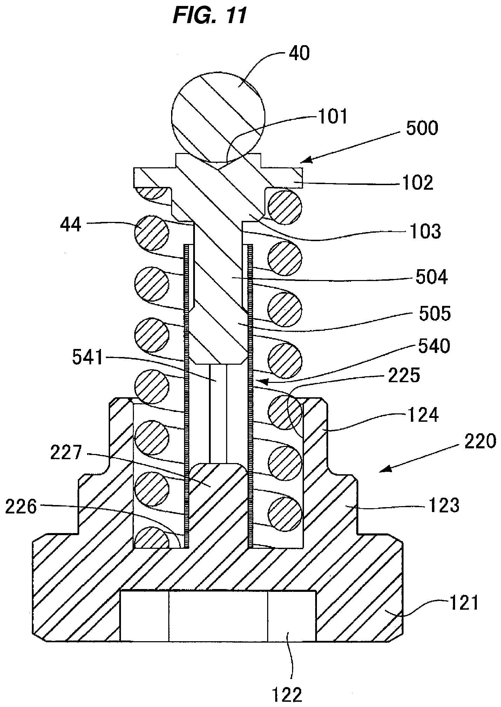

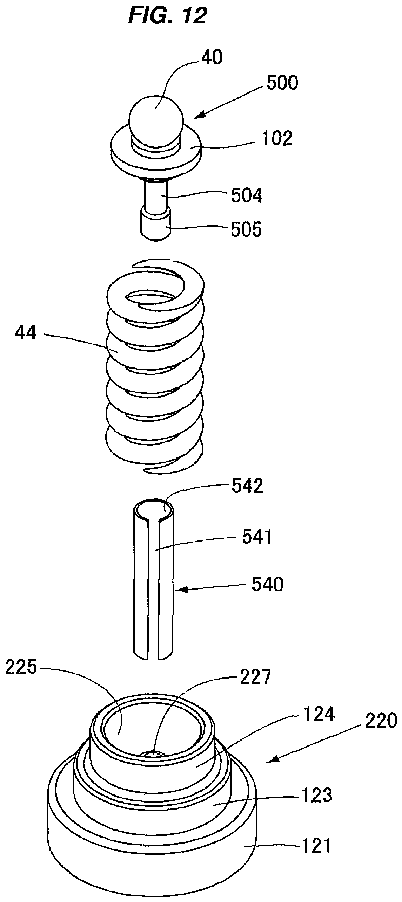

Fig. 11 is a longitudinal sectional view illustrating a main part of an expansion valve according to a fifth embodiment. Fig. 12 is an exploded perspective view illustrating a main part of the expansion valve according to the fifth embodiment. Since the configuration of the fifth embodiment is the same as that of the first embodiment (Figs. 1 to 3) except that the support member 100, the adjusting screw 120, and the vibration damping member 140 of the first embodiment are respectively replaced by a support member 500, an adjusting screw 220, and a vibration damping member 540, a repetitive description of the common parts will be omitted. Here, since the adjusting screw 220 is the same as the adjusting screw 220 of the second embodiment, a repetitive description thereof will be omitted.

The support member 500 is a member that supports the valve body 40 toward the valve seat 25 and the valve body 40 may be fixed to the support member 500. The support member 500 includes a main body 103, an upper surface 101, a flange portion 102, a connection portion 504, and a sliding portion 505 and the main body 103, the upper surface 101, and the flange portion 102 are the same as those of the support member 100 of the first embodiment. The lower portion of the main body 103 is provided with the connection portion 504 having a columnar shape and the lower portion thereof is provided with the sliding portion 505 having a columnar shape. The outer peripheral surface of the sliding portion 505 is a portion which comes into contact with the inner surface 542 of the vibration damping member 540. The outer diameter of the column of the sliding portion 505 is smaller than the outer diameter of the column of the main body 103 and the sliding portion 505 is formed in a size in which the sliding portion is press-inserted into the vibration damping member 540 by the elastic force of the vibration damping member 540. Further, the outer diameter of the connection portion 504 is smaller than the sliding portion 505. The support member 500 is made of, for example, metal.

The vibration damping member 540 is a cylindrical member extending in the vertical direction and has a slit 541 in the vertical direction. That is, the vibration damping member 540 has a C-shape in the top view. The outer diameter of the vibration damping member 540 is smaller than the inner diameter of the coil spring 44 so that the vibration damping member enters the inner diameter of the coil spring 44. The vibration damping member 540 is an elastically deformable member and is made of, for example, metal. The vibration damping member 540 is set to a size in which the sliding portion 505 of the support member 500 is inserted into the upper portion and the protrusion 227 of the adjusting screw 220 is inserted into the lower portion.

As for the assembly of the vibration damping member 540, the lower side of the vibration damping member 540 is fixed to the protrusion 227 of the adjusting screw 220 by press-inserting or the like. Next, the coil spring 44 is inserted into the concave portion 225 of the adjusting screw 220 and the sliding portion 505 of the support member 500 is inserted from the upper portion of the vibration damping member 540. At this time, the vibration damping member 540 is elastically deformed while widening a gap of the slit 541 by the sliding portion 505 of the vibration damping member 540. Then, the vibration damping member 540 is pressed inward from the inner surface 542 of the vibration damping member 540 toward the outer peripheral surface of the sliding portion 505 by the restoring force generated by the elasticity of the vibration damping member. A direction of a force generated by the pressing operation becomes orthogonal to the opening/closing direction of the valve body 40 moving along with the support member 500.

The fifth embodiment has the same effect as that of the first embodiment by a configuration in which the sliding portion 505 of the support member 500 is pressed inward at a constant force from the vibration damping member 540. Further, since the vibration damping member 540 is formed in a cylindrical shape having the slit 541, it is possible to suppress an increase in cost. At the same time, since the elastic deformation can be adjusted by the slit 541, it is possible to accomplish a role as a pressure equalizing passage.

### <Comparative example>

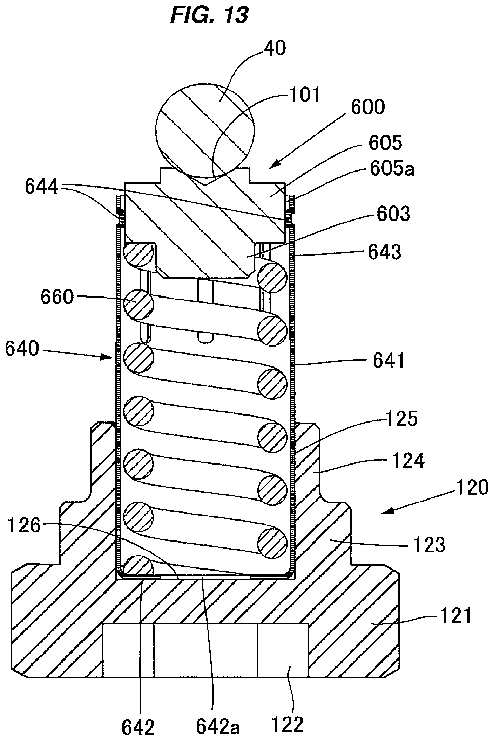

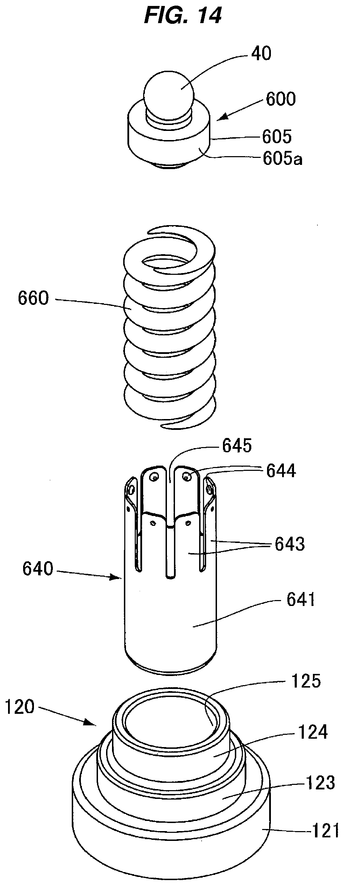

Fig. 13 is a longitudinal sectional view illustrating a main part of an expansion valve according to a comparative example. Fig. 14 is an exploded perspective view illustrating a main part of the expansion valve according to the comparative example. Since the configuration of the comparative example is the same as that of the first embodiment (Figs. 1 to 3) except that the support member 100, the vibration damping member 140, and the coil spring 44 of the first embodiment are respectively replaced by a support member 600, a vibration damping member 640, and a coil spring 660, a repetitive description of the common parts will be omitted.

The support member 600 is a member that supports the valve body 40 toward the valve seat 25 and the valve body 40 may be fixed to the support member 600. The support member 600 includes a main body 603, an upper surface 101, and a sliding portion 605. The upper surface 101 is the same as the support member 100 of the first embodiment. Further, the sliding portion 605 is formed in a flange shape protruding toward the side surface in relation to the main body 603 and the lower surface of the sliding portion 605 is used to support one end of the coil spring 660. At this time, the main body 603 at the lower side of the sliding portion 605 enters the inner diameter of the coil spring 660. The outer diameter of the sliding portion 605 is larger than the outer diameter of the coil spring 660 and the sliding portion enters between the facing leaf spring portions 643 of the vibration damping member 640 while being pressed by the elastic force of the leaf spring portion 643. Further, the vertical length of the sliding portion 605 is set to a length necessary for the sliding of the support member 600. The support member 600 is made of, for example, metal.

The vibration damping member 640 includes a cylindrical portion 641, a bottom portion 642, and a leaf spring portion 643. The inner diameter of the cylindrical portion 641 is set to be larger than the outer diameter of the coil spring 660 so as to accommodate the coil spring 660. The outer diameter of the cylindrical portion 641 is fitted to the concave portion 125 of the adjusting screw 120. The lower portion of the cylindrical portion 641 is formed as the bottom portion 642 and the bottom portion is provided with a hole 642a. Further, the upper portion of the cylindrical portion 641 is formed as a plurality of the leaf spring portions 643 extending upward from the cylindrical portion 641. Specifically, eight leaf spring portions 643 are provided so that two leaf spring portions face each other and a protrusion 644 is formed inward in the vicinity of the front end of each of the leaf spring portions 643. Further, a gap 645 is formed between the adjacent leaf spring portions 643. The vibration damping member 640 is an elastically deformable member and is made of, for example, metal.

As for the assembly of the vibration damping member 640, the lower side of the vibration damping member 640 is press-inserted into the concave portion 125 of the adjusting screw 120 to be fixed thereto. At this time, the bottom portion 642 of the vibration damping member 640 comes into contact with the bottom portion 126 of the adjusting screw 120. Next, the coil spring 660 is inserted into the concave portion 125 of the adjusting screw 120 and the sliding portion 605 of the support member 600 is inserted between the facing leaf spring portions 643 from the upper portion of the vibration damping member 640. At this time, the protrusion 644 of the leaf spring portion 643 is pressed at a constant force toward the outer peripheral surface 605a of the inner sliding portion 605 by the elastic force of the leaf spring portion 643. A direction of a force generated by the pressing operation becomes orthogonal to the opening/closing direction of the valve body 40 moving along with the support member 600. That is, the sliding portion 605 is pressed inward by eight protrusions 644 from eight directions.

The comparative example has the same effect as that of the first embodiment by a configuration in which the sliding portion 605 of the support member 600 is pressed inward at a constant force from the vibration damping member 640. Further, since the lower portion of the vibration damping member 640 is inserted into the concave portion 125 of the adjusting screw 120, the vibration damping member 640 can be reliably fixed. At the same time, since the outside of the coil spring 660 is covered by the vibration damping member 640, an influence of the flow of the refrigerant with respect to the coil spring 660 can be reduced.

### <Sixth Embodiment>

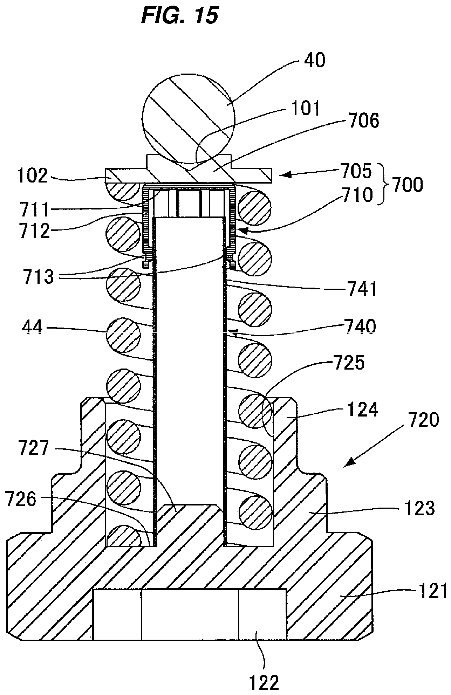

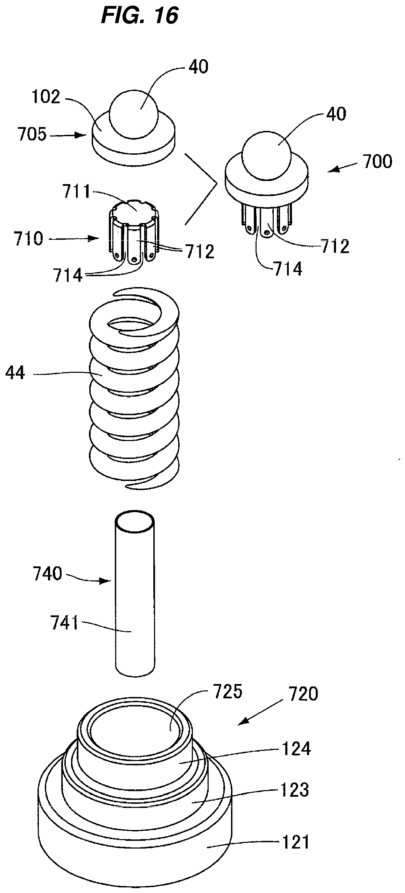

Fig. 15 is a longitudinal sectional view illustrating a main part of an expansion valve according to a sixth embodiment. Fig. 16 is an exploded perspective view illustrating a main part of the expansion valve according to the sixth embodiment. Since the configuration of the sixth embodiment is the same as that of the first embodiment (Figs. 1 to 3) except that the support member 100, the adjusting screw 120, and the vibration damping member 140 of the first embodiment are respectively replaced by a support member 700, an adjusting screw 720, and a vibration damping member 740, a repetitive description of the common parts will be omitted.

The support member 700 is a member that supports the valve body 40 toward the valve seat 25 and the valve body 40 may be fixed to the support member 700. The support member 700 includes a main support body 705 and a sliding member 710 and the main support body 705 includes a main body 706, an upper surface 101, and a flange portion 102. The upper surface 101 formed on the upper surface of the main body 706 and the flange portion 102 protruding from the side surface of the main body 706 are the same as those of the support member 100. The lower surface of the main body 706 is formed as the same plane as the flange portion 102. Further, the sliding member 710 includes an upper portion 711 and a leg portion 712. The upper portion 711 is a plate-shaped member and the size is smaller than the inner diameter of the coil spring 44 so that the sliding member 710 enters the inner diameter of the coil spring 44. Further, the leg portion 712 is a member that is similar to a leaf spring member and serves as a sliding portion and is formed as a plurality of members extending downward from the side surface of the upper portion 711. Specifically, four leg portions 712 are provided so that two leg portions face each other and a protrusion 713 is formed inward in the vicinity of the front end of each of the leg portions 712. Further, a gap 714 is formed between the adjacent leg portions 712. The length of the leg portion 712, that is, the length from the upper portion 711 to the protrusion 713 is set to be equal to or longer than a length necessary for the sliding of the support member 700. The support member 700 is integrated by bonding the lower surface of the main support body 705 and the upper surface of the upper portion 711 of the sliding member 710. The bonding can be performed by, for example, spot-welding or the like. Further, the sliding member 710 is an elastically deformable member and is made of, for example, metal. The main support body 705 is also made of metal or the like, but the material of the sliding member 710 may be changed.

The adjusting screw 720 includes a main body 121, a hexagonal hole 122, an insertion portion 123, a front end 124, a concave portion 725, and a protrusion 727 and the main body 121, the hexagonal hole 122, the insertion portion 123, and the front end 124 are the same as those of the adjusting screw 120 of the first embodiment. The upper portion of the adjusting screw 720 is provided with the concave portion 725 having a columnar space opened upward, but the columnar protrusion 727 is formed upward in the vicinity of the center of the bottom portion 726 of the concave portion 725. The protrusion 727 has a diameter in which the protrusion can be inserted into the vibration damping member 740 and has a length necessary to fix the vibration damping member. Additionally, the concave portion 725 is formed in a depth reaching the vicinity of the main body 121. Further, the inner diameter of the concave portion 725 matches the outer diameter of the coil spring 44 so that the coil spring 44 is inserted into the concave portion 725 without any misalignment. The adjusting screw 720 is attached to the valve main body 11 in the same manner as the adjusting screw 120 of the first embodiment.

The vibration damping member 740 is a cylindrical member extending in the vertical direction. The outer diameter of the vibration damping member 740 is set to a size in which the vibration damping member enters between the facing leg portions 712 of the support member 700 while being pressed inward by the elastic force of the leg portion 712 at an inner position or the inner diameter of the coil spring 44 and an upper position thereof. The inner diameter of the vibration damping member 740 is set to a size in which the protrusion 727 of the adjusting screw 720 is inserted into the lower portion of the vibration damping member. The vibration damping member 740 can be made of a high-rigid material and is made of, for example, metal.

As for the assembly of the vibration damping member 740, the lower side of the vibration damping member 740 is press-inserted into the protrusion 727 of the adjusting screw 720 to be fixed thereto. Next, the coil spring 44 is inserted into the concave portion 725 of the adjusting screw 720 and the upper portion of the vibration damping member 740 is inserted between the leg portions 712 of the support member 700 to be attached thereto. At this time, the protrusion 713 of the leg portion 712 is pressed at a constant force toward the outer peripheral surface 741 of the inner vibration damping member 740 by the elastic force of the leg portion 712. A direction of the force generated by the pressing operation becomes orthogonal to the opening/closing direction of the valve body 40 moving along with the support member 100. That is, the vibration damping member 740 is pressed inward by eight protrusions 713 from eight directions.

The sixth embodiment has the same effect as that of the first embodiment by a configuration in which the outer peripheral surface 741 of the vibration damping member 740 is pressed inward at a constant force from the sliding member 710 of the support member 700. Further, since the main support body 705 and the sliding member 710 can be made of the same material, the sliding member 710 can be formed as a member that is strong against abrasion during sliding. Further, since the lower portion of the vibration damping member 740 is inserted into the protrusion 727 of the adjusting screw 720, the vibration damping member 740 can be reliably fixed.

### <Seventh Embodiment

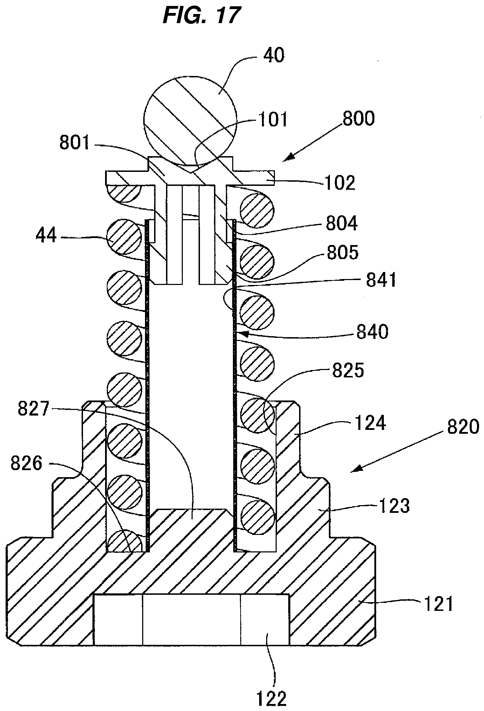

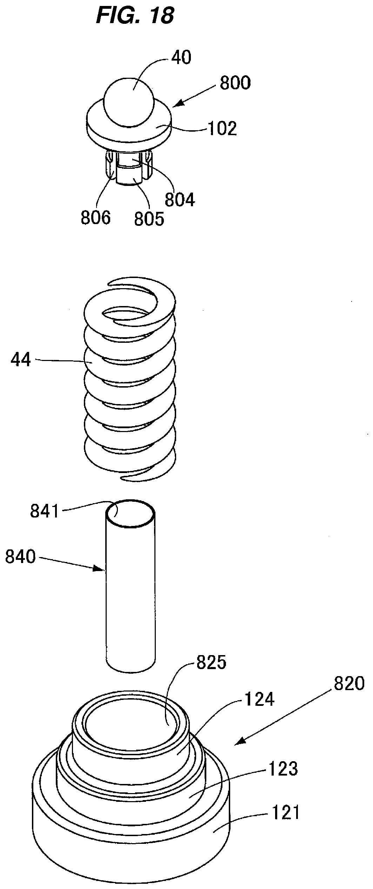

Fig. 17 is a longitudinal sectional view illustrating a main part of an expansion valve according to a seventh embodiment. Fig. 18 is an exploded perspective view illustrating a main part of the expansion valve according to the seventh embodiment. Since the configuration of the seventh embodiment is the same as that of the first embodiment (Figs. 1 to 3) except that the support member 100, the adjusting screw 120, and the vibration damping member 140 of the first embodiment are respectively replaced by a support member 800, an adjusting screw 820, and a vibration damping member 840, a repetitive description of the common parts will be omitted.

The support member 800 is a member that supports the valve body 40 toward the valve seat 25 and the valve body 40 may be fixed to the support member 800. The support member 800 includes a main body 801, an upper surface 101, a flange portion 102, and a leg portion 804 and the upper surface 101 formed on the upper surface of the main body 801 and the flange portion 102 protruding from the side surface of the main body 801 are the same as those of the support member 100. The lower surface of the main body 801 is formed as the same plane as the flange portion 102 and a plurality of the leg portions 804 extend downward therefrom. The leg portion 804 is formed as a sliding portion. Furthermore, the leg portion 804 is provided with a protrusion 805 protruding downward from the front end thereof. Specifically, four leg portions 804 are provided and the protrusion 805 has an external shape formed as a circular-arc shape following the inner peripheral surface of the vibration damping member 840. The leg portion 804 is formed to be elastically deformable in order to be pressed against the inner peripheral surface 841 of the vibration damping member 840. The length of the leg portion 804 is set to be equal to or longer than a length necessary for the sliding of the support member 800. Further, the support member 800 is an elastically deformable member and is made of, for example, metal.

The adjusting screw 820 includes a main body 121, a hexagonal hole 122, an insertion portion 123, a front end 124, a concave portion 825, and a protrusion 827 and the main body 121, the hexagonal hole 122, the insertion portion 123, and the front end 124 are the same as those of the adjusting screw 120 of the first embodiment. The upper portion of the adjusting screw 820 is provided with the concave portion 825 having a columnar space opened upward, but the columnar protrusion 827 is formed upward in the vicinity of the center of the bottom portion 826 of the concave portion 825. The protrusion 827 has a diameter in which the protrusion can be inserted into the vibration damping member 840 and a length necessary to fix the vibration damping member. Additionally, the concave portion 825 is formed in a depth reaching the vicinity of the main body 121. Further, the inner diameter of the concave portion 825 is set to a size matching the outer diameter of the coil spring 44 so that the coil spring 44 is inserted into the concave portion 825 without any misalignment. The adjusting screw 820 is attached to the valve main body 11 in the same manner as the adjusting screw 120 of the first embodiment.

The vibration damping member 840 is a cylindrical member extending in the vertical direction. The outer diameter of the vibration damping member 840 is smaller than the inner diameter of the coil spring 44 so that the vibration damping member enters the inner diameter of the coil spring 44. The inner diameter of the vibration damping member 840 is set to a size in which the leg portion 804 of the support member 800 is inserted into the upper portion and the protrusion 827 of the adjusting screw 820 is inserted into the lower portion. The vibration damping member 840 can be made of a high-rigid material and is made of, for example, metal.

As for the assembly of the vibration damping member 840, the lower side of the vibration damping member 840 is fixed to the protrusion 827 of the adjusting screw 820 by press-inserting or the like. Next, the coil spring 44 is inserted into the concave portion 125 of the adjusting screw 120 and the leg portion 804 of the support member 800 is inserted into the upper portion of the vibration damping member 840 to be attached thereto. At this time, the protrusion 805 is pressed toward the inner peripheral surface 841 of the outer vibration damping member 840 at a constant force by the elastic force of the leg portion 804. A direction of the force generated by the pressing operation becomes orthogonal to the opening/closing direction of the valve body 40 moving along with the support member 800. That is, the vibration damping member 840 is pressed outward by four protrusions 805 from four directions.

The seventh embodiment has the same effect as that of the first embodiment by a configuration in which the inner peripheral surface 841 of the vibration damping member 840 is pressed outward at a constant force from the leg portion 804 of the support member 800. Further, since the vibration damping member 840 is formed at the outside of the leg portion 804, an influence of the flow of the refrigerant of the leg portion 804 can be reduced. Furthermore, since the outer diameter of the vibration damping member 840 can be formed to match the inner diameter of the coil spring 44, the coil spring 44 can be more reliably positioned, and the lower portion of the vibration damping member 840 is inserted into the protrusion 827 of the adjusting screw 820, the vibration damping member 840 can be reliably fixed.

### <Eighth Embodiment>

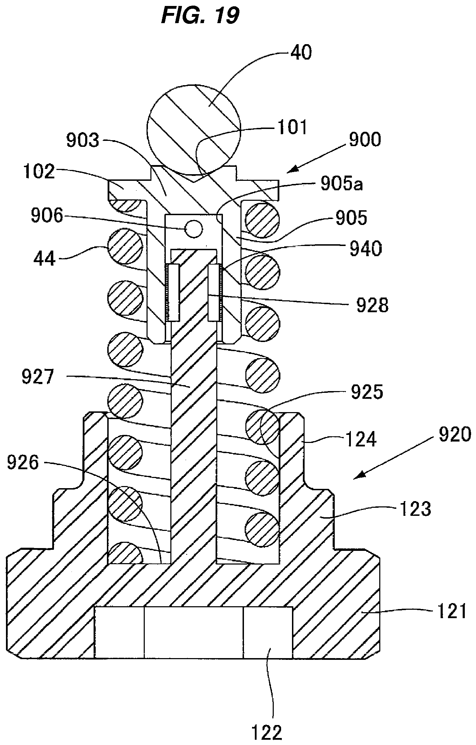

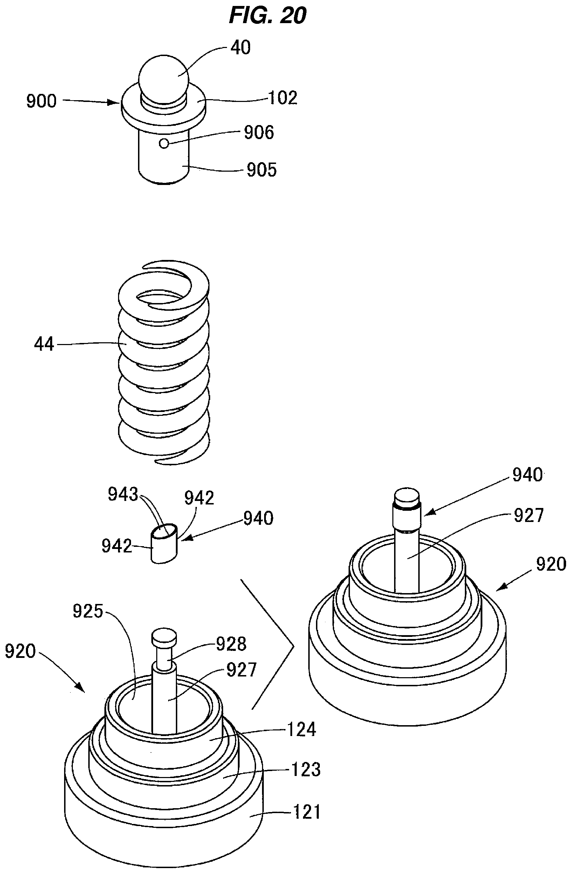

Fig. 19 is a longitudinal sectional view illustrating a main part of an expansion valve according to an eighth embodiment. Fig. 20 is an exploded perspective view illustrating the main part of the expansion valve according to the eighth embodiment. Since the configuration of the eighth embodiment is the same as that of the first embodiment (Figs. 1 to 3) except that the support member 100, the adjusting screw 120, and the vibration damping member 140 of the first embodiment are respectively replaced by a support member 900, an adjusting screw 920, and a vibration damping member 940, a repetitive description of the common parts will be omitted.

The support member 900 is a member that supports the valve body 40 toward the valve seat 25 and the valve body 40 may be fixed to the support member 900. The support member 900 includes a main body 903, an upper surface 101, a flange portion 102, and a sliding portion 905 and the upper surface 101 formed on the upper surface of the main body 903 and the flange portion 102 protruding from the side surface of the main body 903 are the same as those of the support member 100. The sliding portion 905 is provided at the lower portion of the main body 903 and has a cylindrical shape opened downward. The outer diameter of the sliding portion 905 is the same as the outer diameter of the main body 903 and is formed in a size in which the sliding portion enters the inner diameter of the coil spring 44. Then, a cylindrical inner peripheral surface 905a of the sliding portion 905 is a portion which comes into contact with a long-axis outer surface 942 of the vibration damping member 940 and the size inside the cylinder of the sliding portion 905 is set to a size in which the long-axis outer surface 942 of the vibration damping member 940 enters therein while being pressed inward by the elastic force. Further, the vertical length of the inner peripheral surface 905a of the sliding portion 905 is set to be equal to or longer than a length necessary for the sliding of the support member 900. Further, a hole 906 which causes the inside and the outside of the cylindrical portion of the sliding portion 905 to communicate with each other is formed in the vicinity of the upper portion of the cylindrical portion. The support member 900 is made of, for example, metal.

The adjusting screw 920 includes a main body 121, a hexagonal hole 122, an insertion portion 123, a front end 124, a concave portion 925, and a columnar portion 927 and the main body 121, the hexagonal hole 122, the insertion portion 123, and the front end 124 are the same as those of the adjusting screw 120 of the first embodiment. The upper portion of the adjusting screw 920 is provided with the concave portion 925 having a columnar space opened upward, but the columnar portion 927 extends formed upward in the vicinity of the center of the bottom portion 926 of the concave portion 925. A groove portion 928 for attaching the vibration damping member 940 is formed in the vicinity of the upper portion of the columnar portion 927. The diameter of the columnar portion 927 is set to a size in which the columnar portion enters the cylinder of the sliding portion 905 of the support member 900. Additionally, the length of the columnar portion 927 is a length in which the groove portion 928 can be located inside the sliding portion 905 of the support member 900. The concave portion 925 is formed in a depth reaching the vicinity of the main body 121. Further, the inner diameter of the concave portion 925 is set to a size matching the outer diameter of the coil spring 44 so that the coil spring 44 is inserted into the concave portion 925 without any misalignment. The adjusting screw 920 is attached to the valve main body 11 in the same manner as the adjusting screw 120 of the first embodiment.

The vibration damping member 940 is a cylindrical member having an oval shape in the top view and has a restoring force generated by elasticity. At this time, a distance between the short-axis inner surfaces 943 is smaller than at least the diameter of the columnar portion 927 in order to realize the attachment to the groove portion 928. Further, a distance between the long-axis outer surfaces 942 is larger than the diameter of the columnar portion 927 and is larger than the inner diameter of the cylindrical portion of the sliding portion 905 so that the inner peripheral surface 905a of the sliding portion 905 of the adjusting screw 920 can be pressed by the restoring force. The vertical length of the vibration damping member 940 is equal to or shorter than the vertical length of the groove portion 928. The vibration damping member 940 is an elastically deformable member and is made of, for example, metal or rubber.

As for the assembly of the vibration damping member 940, the vibration damping member 940 is inserted into the groove portion 928 of the adjusting screw 920. Next, the coil spring 44 is inserted into the concave portion 125 of the adjusting screw 120 and the support member 900 is attached from the upper portion of the columnar portion 927 of the adjusting screw 920. At this time, the long-axis outer surface 942 of the vibration damping member 940 is pressed by the inner peripheral surface 905a of the sliding portion 905 of the support member 900 to be formed in a substantially circular shape. A force of a force generated by the pressing operation becomes orthogonal to the opening/closing direction of the valve body 40 moving along with the support member 900. That is, the support member 900 is pressed outward from two directions by two long-axis outer surfaces 942 of the vibration damping member 940.

The eighth embodiment has the same effect as that of the first embodiment by a configuration in which the sliding portion 905 of the support member 900 is pressed outward at a constant force from the vibration damping member 940. Further, since the vibration damping member 940 is attached to the groove portion 928, the vibration damping member 940 can be made in a small size at a low cost. At the same time, since the vibration damping member 940 is attached into the sliding portion 905, an influence of the flow of the refrigerant toward the vibration damping member 940 can be reduced.

As described above, the first embodiment to the eighth embodiment have been described as the embodiments of the invention, but the invention is not limited to the above-described embodiments and includes various modified examples. For example, the invention does not need to have all configurations (structures) of the above-described embodiments. Further, a part of the configuration of an embodiment can be deleted or replaced by the configuration of another embodiment or the configuration of another embodiment can be added to the configuration of an embodiment.

For example, the power element 70 of the embodiment is attached by a screw, but the power element 70 may be also attached in such a manner that a cylindrical portion is formed at the upper portion of the valve main body, the power element 70 is inserted into the cylindrical portion, and the inside of the cylindrical portion is clamped.

### EXPLANATIONS OF LETTERS OR NUMERALS

10 expansion valve
11 valve main body
20 inlet port
20a small diameter hole
24 valve chamber
25 valve seat
26 valve hole
28 outlet port
30 return passage
40 valve body
44, 660 coil spring
60 valve rod
70 power element
100, 110, 200, 500, 600, 700, 800, 900 support member
105, 111, 205, 505, 605, 905 sliding portion
120, 220, 420, 720, 820, 920 adjusting screw
140, 150, 240, 340, 440, 540, 640, 740, 840, 940 vibration damping member
143, 153, 343, 443, 643 leaf spring portion
710 sliding member
712, 804 leg portion
805 protrusion

## Claims

1. An expansion valve (10) comprising:
a valve main body (11) which includes a valve hole (26) allowing an inlet port (20) receiving a refrigerant to communicate with an outlet port (28) discharging the refrigerant;
a valve body (40) which adjusts an amount of the refrigerant flowing through the valve hole (26);
a power element (70) which is attached to the valve main body (11) and drives the valve body (40) through a valve rod;
a support member (100; 200; 500; 700; 800; 900) that supports the valve body (40);
a coil spring (44) which presses the valve body (40) in a closing direction through the support member (100);
an adjusting screw (120; 220; 420; 720; 820; 920) which is threaded into the valve main body (11) and adjusts a pressing force of the coil spring (44); and
a vibration damping member (140; 240; 340; 440; 540; 740; 840; 940) that is locked to the adjusting screw (120; 220; 420; 720; 820; 920),
wherein the support member (100; 110; 200; 500; 700; 800; 900) includes a sliding portion (105; 111; 205; 505; 710; 805; 905) which contacts the vibration damping member (140; 150; 240; 340; 440; 540; 740; 840; 940) to be slidable in an opening/closing direction of the valve body (40),
**characterized in that**
the vibration damping member (140; 150; 240; 340; 440; 540; 740; 840; 940) and the sliding portion (105; 111; 205; 505; 710, 805, 905) are disposed inside the coil spring (44).

2. The expansion valve (10) according to claim 1,
wherein the vibration damping member (140; 150) includes a leaf spring portion (143; 153) and presses the sliding portion (105; 111) by an elastic force of the leaf spring portion (143; 153).

3. The expansion valve (10) according to claim 2,
wherein the sliding portion (105) includes a columnar portion and the vibration damping member (140) presses an outer peripheral surface (105a) of the columnar portion by the elastic force of the leaf spring portion (143).

4. The expansion valve (10) according to claim 2,
wherein the sliding portion (111) includes a cylindrical portion and the vibration damping member (150) presses an inner peripheral surface (111a) of the cylindrical portion by an elastic force of the leaf spring portion (153).

5. The expansion valve (10) according to claim 1,
wherein the vibration damping member (540) is a cylindrical elastic member and presses the sliding portion (505) disposed therein by a restoring force of the cylinder.

6. The expansion valve (10) according to claim 5,
wherein the vibration damping member (540) is provided with a slit (541) extending in a vertical direction.

7. The expansion valve (10) according to claim 1,
wherein the sliding portion (710) of the support member (700; 800) includes a leg portion (712; 804) and presses the vibration damping member (740; 840) by an elastic force of the leg portion (712; 804).

8. The expansion valve (10) according to claim 7,
wherein the vibration damping member (740) includes a columnar portion and presses an outer peripheral surface (741) of the columnar portion by the elastic force of the leg portion (712).

9. The expansion valve (10) according to claim 7,
wherein the vibration damping member (840) includes a cylindrical portion and presses an inner peripheral surface (841) of the cylindrical portion by the elastic force of the leg portion (804).

10. The expansion valve (10) according to claim 1,
wherein the sliding portion (205) includes a cylindrical portion, the adjusting screw (220) includes a protrusion (227) extending upward, the vibration damping member (240) is an oval cylindrical member provided at the protrusion (227), and the inner peripheral surface of the cylindrical portion of the sliding portion (205) is pressed by the restoring force of the cylindrical member (240).

11. The expansion valve (10) according to any one of claims 1 to 9,
wherein the vibration damping member (140; 150; 340) includes a plate-shaped locking portion (142; 152; 342) extending in a horizontal direction and locks the vibration damping member (140; 150; 340) to the adjusting screw (120) by interposing the locking portion between the adjusting screw (120) and the coil spring (44).

12. The expansion valve (10) according to any one of claims 1 to 9,
wherein the adjusting screw (120) includes a protrusion located at a center, the vibration damping member (140) is inserted into the protrusion, and the vibration damping member (140) is locked to the adjusting screw (120).

13. The expansion valve (10) according to any one of claims 1 to 12,
wherein a pressure equalizing passage (145; 241) communicating with an inner space formed inside the support member (100; 200) or the vibration damping member (140; 240) is provided at the support member (100; 200) or the vibration damping member (140; 240).

## Patentansprüche

1. Ein Expansionsventil (10), das aufweist:
einen Ventilgrundkörper (11), der eine Ventilöffnung (26) umfasst, die es ermöglicht, dass eine Einlassöffnung (20), die ein Kühlmittel aufnimmt, mit einer Auslassöffnung (28), die das Kühlmittel abführt, kommuniziert;
einen Ventilkörper (40), der eine Menge des Kühlmittels, das durch die Ventilöffnung (26) strömt, einstellt;
ein Leistungselement (70), das an dem Ventilgrundkörper (11) befestigt ist und das den Ventilkörper (40) durch einen Ventilstab antreibt;
ein Stützbauteil (100; 200; 500; 700; 800; 900), das den Ventilkörper (40) abstützt;
eine Spiralfeder (44), die den Ventilkörper (40) mittels des Stützbauteils (100) in eine Schließrichtung andrückt;
eine Einstellschraube (120; 220; 420; 720; 820; 920), die in den Ventilgrundkörper (11) eingeschraubt ist und die eine Andruckkraft der Spiralfeder (44) einstellt; und
ein Schwingungsdämpfungsbauteil (140; 240; 340; 440; 540; 740; 840; 940), das an der Einstellschraube (120; 220; 420; 720; 820; 920) fixiert ist,
wobei das Stützbauteil (100; 110; 200; 500; 700; 800; 900) einen Gleitbereich (105; 111; 205; 505; 710; 805; 905) aufweist, der das Schwingungsdämpfungsbauteil (140; 150; 240; 340; 440; 540; 740; 840; 940) so kontaktiert, dass es in einer Öffnungs-/Schließrichtung des Ventilkörpers (40) gleitfähig ist, **dadurch gekennzeichnet, dass**
das Schwingungsdämpfungsbauteil (140; 150; 240; 340; 440; 540; 740; 840; 940) und der Gleitbereich (105; 111; 205; 505; 710, 805, 905) in der Spiralfeder angeordnet sind.

2. Das Expansionsventil (10) gemäß Anspruch 1,
wobei das Schwingungsdämpfungsbauteil (140; 150) einen Blattfederbereich (143; 153) umfasst und den Gleitbereich (150; 111) durch eine elastische Kraft des Blattfederbereichs (143; 153) andrückt.

3. Das Expansionsventil (10) gemäß Anspruch 2,
wobei der Gleitbereich (105) einen säulenförmigen Bereich umfasst und das Schwingungsdämpfungsbauteil (140) eine äußere Umfangsfläche (105a) des säulenförmigen Bereichs durch die elastische Kraft des Blattfederbereichs (143) andrückt.

4. Das Expansionsventil (10) gemäß Anspruch 2,
wobei der Gleitbereich (111) einen zylindrischen Bereich umfasst und das Schwingungsdämpfungsbauteil (140) eine innere Umfangsfläche (111a) des zylindrischen Bereichs durch die elastische Kraft des Blattfederbereichs (153) andrückt.

5. Das Expansionsventil (10) gemäß Anspruch 1,
wobei das Schwingungsdämpfungsbauteil (540) ein zylindrisches elastisches Bauteil ist und den Gleitbereich (505), der darin angeordnet ist, durch eine Rückstellkraft des Zylinders andrückt.

6. Das Expansionsventil (10) gemäß Anspruch 5,
wobei das Schwingungsdämpfungsbauteil (540) mit einem Schlitz versehen ist, der sich in vertikaler Richtung erstreckt.

7. Das Expansionsventil (10) gemäß Anspruch 1,
wobei der Gleitbereich (710) des Stützbauteils (700; 800) einen Schenkelbereich (712; 804) umfasst und das Schwingungsdämpfungsbauteil (740; 840) durch eine elastische Kraft des Schenkelbereichs (712; 804) anpresst.

8. Das Expansionsventil (10) gemäß Anspruch 7,
wobei das Schwingungsdämpfungsbauteil (740) einen säulenförmigen Bereich umfasst und eine äußere Umfangsfläche (741) des säulenförmigen Bereichs durch die elastische Kraft des Schenkelbereichs (712) anpresst.

9. Das Expansionsventil (10) gemäß Anspruch 7,
wobei das Schwingungsdämpfungsbauteil (840) einen zylindrischen Bereich umfasst und eine innere Umfangsfläche (841) des zylindrischen Bereichs durch die elastische Kraft des Schenkelbereichs (804) andrückt.

10. Das Expansionsventil (10) gemäß Anspruch 1,
wobei der Gleitbereich (205) einen zylindrischen Bereich umfasst, die Einstellschraube (220) einen sich nach oben erstreckenden Vorsprung (227) umfasst, das Schwingungsdämpfungsbauteil (240) ein ovales Zylinderbauteil ist, das an dem Vorsprung (227) angebracht ist, und die innere Umfangsfläche des zylindrischen Bereichs des Gleitbereichs (205) durch die Rückstellkraft des Zylinderbauteils (240) angedrückt wird.

11. Das Expansionsventil (10) gemäß einem der Ansprüche 1 bis 9,
wobei das Schwingungsdämpfungsbauteil (140; 150; 340) einen plattenförmigen Verriegelungsbereich (142; 152; 342) umfasst, der sich in einer horizontalen Richtung erstreckt und der das Schwingungsdämpfungsbauteil (140; 150; 340) an der Einstellschraube (120) fixiert, indem der Verriegelungsbereich zwischen die Einstellschraube (120) und die Schraubenfeder (44) eingefügt wird.

12. Das Expansionsventil (10) gemäß einem der Ansprüche 1 bis 9,
wobei die Einstellschraube (120) einen Vorsprung umfasst, der in einem Mittelpunkt angeordnet ist, wobei das Schwingungsdämpfungsbauteil (140) in den Vorsprung eingesetzt ist, und das Schwingungsdämpfungsbauteil (140) an der Einstellschraube (120) fixiert ist.

13. Das Expansionsventil (10) gemäß einem der Ansprüche 1 bis 12,
wobei ein Druckausgleichsdurchgang (145; 241), der mit einem in dem Stützbauteil (100; 200) ausgeformten Innenbereich oder mit dem Schwingungsdämpfungsbauteil (140; 240) kommuniziert, an dem Stützbauteil (100; 200) oder an dem Schwingungsdämpfungsbauteil (140; 240) vorgesehen ist.

## Revendications

1. Vanne d'expansion (10) comprenant:
un corps de base de soupape (11) qui comprend une ouverture de soupape (26) permettant une orifice d'admission (20) qui reçoit un réfrigérant de communiquer avec une orifice de sortie (28) qui décharge le réfrigérant;
un corps de soupape (40) qui ajuste une quantité de réfrigérant qui coule au travers de l'ouverture de soupape (26) ;
un élément de puissance (70) qui est attaché au corps de base de soupape (11) et qui entraîne le corps de valve (40) par une tige de soupape;
un élément de support (100; 200; 500; 700; 800; 900) qui supporte le corps de base de soupape (40);
un ressort spirale (44) qui appuie le corps de soupape (40) dans un sens de fermeture par l'élément de support (100);
une vis de réglage (120; 220; 420; 720; 820; 920) qui est vissée dans le corps de base de soupape (11) et qui ajuste une force de pression du ressort spirale (44); et
un élément d'amortissement de vibrations (140; 240; 340; 440; 540; 740; 840; 940) qui est verrouillé sur la vis de réglage (120; 220; 420; 720; 820; 920),
dans laquelle l'élément de support (100; 110; 200; 500; 700; 800; 900) comprend une partie de glissement (105; 111; 205; 505; 710; 805; 905) qui touche l'élément d'amortissement de vibrations (140; 150; 240; 340; 440; 540; 740; 840; 940) de manière coulissante dans un sens d'ouverture/fermeture du corps de valve (40),
**caractérisé en ce que**
l'élément d'amortissement de vibrations (140; 150; 240; 340; 440; 540; 740; 840; 940) et la partie de glissement (105; 111; 205; 505; 710, 805, 905) sont disposés dedans le ressort spirale (44).

2. La vanne d'expansion (10) selon revendication 1,
dans laquelle l'élément d'amortissement de vibrations (140; 150) comprend une partie de ressort à lames (143; 153) et appuie la partie de glissement (105; 111) par une force élastique de la partie de ressort à lames (143; 153).

3. La vanne d'expansion (10) selon revendication 2,
dans laquelle la partie de glissement (105) comprend une partie en forme de colonne et l'élément d'amortissement de vibrations (140) appuie une surface périphérique extérieure (105a) de la partie en forme de colonne par une force élastique de la partie de ressort à lames (143).

4. La vanne d'expansion (10) selon revendication 2,
dans laquelle la partie de glissement (111) comprend une partie cylindrique et l'élément d'amortissement de vibrations (150) appuie une surface périphérique intérieure (111a) de la partie cylindrique par une force élastique de la partie de ressort à lames (153).

5. La vanne d'expansion (10) selon revendication 1,
dans laquelle l'élément d'amortissement de vibrations (540) est une élément cylindrique élastique et appuie la partie de glissement (505) disposée là-dedans par une force de rappel du cylindre.

6. La vanne d'expansion (10) selon revendication 5,
dans laquelle l'élément d'amortissement de vibrations (540) est pourvu d'une fente qui s'étend dans une direction verticale.

7. La vanne d'expansion (10) selon revendication 1,
dans laquelle la partie de glissement (710) de l'élément de support (700; 800) comprend une partie de branche (712; 804) et appuie l'élément d'amortissement de vibrations (740; 840) par une force élastique de la partie de branche (712; 804) .

8. La vanne d'expansion (10) selon revendication 7,
dans laquelle l'élément d'amortissement de vibrations (740) comprend une portion en forme de colonne et appuie une surface périphérique extérieure (741) de la partie en forme de colonne par une force élastique de la partie de branche (712).

9. La vanne d'expansion (10) selon revendication 7,
dans laquelle l'élément d'amortissement de vibrations (840) comprend une partie cylindrique et appuie une surface périphérique intérieure (841) de la partie cylindrique par la force élastique de la partie de branche (804).

10. La vanne d'expansion (10) selon revendication 1,
dans laquelle la partie de glissement (205) comprend une partie cylindrique, la vis de réglage (220) comprend une saillie (227) qui s'étend vers le haut, l'élément d'amortissement de vibrations (240) étant un élément ovale cylindrique qui est pourvu à la saillie (227), et la surface périphérique intérieure da partie de glissement (205) est appuyé par la force de rappel de l'élément cylindrique (240).

11. La vanne d'expansion (10) selon une des revendications 1 à 9,
dans laquelle l'élément d'amortissement de vibrations (140; 150; 340) comprend une partie de verrouillage en forme de plaque (142; 152; 342) qui s'étend dans une direction horizontale et qui verrouille l'élément d'amortissement de vibrations (140; 150; 340) avec la vis de réglage (120) par voie de interposer la partie de verrouillage entre la vis de réglage (120) et le ressort spiral (44).

12. La vanne d'expansion (10) selon une des revendications 1 à 9,
dans laquelle la vis de réglage (120) comprend une saillie qui est située dans un centre, l'élément d'amortissement de vibrations (140) étant inséré dans la saillie, et l'élément d'amortissement de vibrations (140) étant verrouillé avec la vis de réglage (120).

13. La vanne d'expansion (10) selon une des revendications 1 à 12,
dans laquelle un passage d'égalisation de pression (145; 241) qui communique avec l'espace intérieur formé dedans l'élément de support (100; 200) ou l'élément d'amortissement de vibrations (140; 240) et pourvu à l'élément de support (100; 200) ou l'élément d'amortissement de vibrations (140; 240) .
